Europäisches Patentamt

(19) European Patent Office

Office européen des brevets

(11) Publication number: **0 014 465**
**A1**

# (12) EUROPEAN PATENT APPLICATION

(21) Application number: **80100583.6**

(22) Date of filing: **05.02.80**

(51) Int. Cl.³: **G 01 N 21/89**
**G 02 B 27/17**

(30) Priority: **06.02.79 DE 2904432**

(43) Date of publication of application:
**20.08.80 Bulletin 80/17**

(84) Designated Contracting States:
**FR GB NL**

(71) Applicant: **Erwin Sick GmbH Optik-Elektronik**
**Sebastian-Kneipp-Strasse 1**
**D-7808 Waldkirch(DE)**

(72) Inventor: **Sick, Erwin**
**Stifterweg 6**
**D-8021 Icking(DE)**

(74) Representative: **Patentanwälte Manitz, Finsterwald und**
**Grämkow**
**Robert-Koch-Strasse 1**
**D-8000 München 22(DE)**

(54) Light curtain generating apparatus incorporating a cycle scale.

(57) Light curtain generating apparatus incorporating a cyclical scale features a light source (19) for directing a beam of light to a mirror wheel (22) located substantially at the focus of a strip-like concave mirror (23) and which is adapted to deflect the beam through a variety of angles into the concave mirror to generate a moving scanning beam traversing the image space of the concave mirror and forming said light curtain. A beam divider (27) is arranged to intercept the scanning beam and to divide off and direct a part of the scanning beam to a cyclical scale generator (14) which features a light conducting rod (11) with a photoelectric detector (12) at at least one end thereof and a cycle scale (14) which extends substantially parallel to the light conducting rod and which modulates the light fraction passed from the divided off part of the scanning beam to the photoelectric detector to modulate the output signal therefrom. The cycle scale can conveniently comprise a bar pattern placed in front of the light conducting rod or a series of spaced apart inclined mirrors (16) at the rear side surface of the light conducting rod.

In an alternative embodiment the light conducting rod is replaced with a number of diodes.

./...

Croydon Printing Company Ltd.

Fig.1

## _-1 -

The invention relates to light curtain generating apparatus
incorporating a cyclical scale generator.

Light curtain generating apparatus is customarily used to
direct a beam of light which is continuously and periodically
displaced sideways substantially parallel to itself through
a region or at a surface to light receiving apparatus for
the purpose of monitoring the region or surface. The light
receiving arrangement conveniently provides a signal when
any irregularity is determined such as an obstruction of the
region or the presence of a hole or other imperfection in
the surface. It is frequently necessary to establish not
only that such an obstruction or imperfection is present in
the monitored region but also to establish its position.
For this purpose it is necessary to know the position of
the scanning beam at the time the obstruction or imperfection
is detected and this is conveniently achieved by means of
a cyclical scale generator which produces signals in
synchrony with the movement of the scanning beam from which
the instantaneous position of the scanning beam can be
readily derived.

In a typical arrangement the light curtain generating apparatus
comprises a transmitter part which generates from a light
source a light bead in a scanning plane, a light deflecting
arrangement which is usually constructed as a mirror wheel
and a strip-like concave mirror with the surface of the
mirror wheel on which the light bead falls located substantially at the focus of the concave mirror. The scanning
beam generated in the image space of the concave mirror is
directed through a corresponding strip-like light outlet
window and a cyclical scale extends along the light outlet
window and is scanned by a part of the scanning beam. The scanning beam then passes via a scanning plane or a retro-
reflector to a photoelectric light receiving arrangement
which detects and convert into a corresponding electrical
signal the light reaching the scanning plane or reflected
from the retroreflector. The arrangement is completed by
a further photoelectric detector which receives light from
the cycle scale.

It is however customary in known arrangements to return the
light beam formed from that part of the scanning beam which
falls on the cycle scale by autocollimation or quasi-
autocollimation back via the mirror wheel and then to reflect
it out of the transmitted beam by a beam divider or deflecting
mirror and then to pass it to the associated photoelectric
detector. The cyclical scale generator is thus optically coupled
via the scanning wheel with the light transmitter which
places restrictions on the optical arrangement and gives rise
to other disadvantages.

The principal object of the present invention is thus to
provide a light curtain generating apparatus incorporating
a cyclical scale of the kind generally described above in
which the light beam from the cycle scale need not be passed
back via the mirror wheel but can instead, if required without
the aid of the strip-like concave mirror, be received by a
simply constructed photodetector.

For accomplishing this object there is provided in accordance
with a first aspect of the invention light curtain generating
apparatus incorporating a cyclical scale generator and
comprising light source means for directing a beam of light
to a light deflecting arrangement located substantially at the
focus of a concave mirror and adapted to deflect said beam through a variety of angles onto said concave mirror for
reflection thereat whereby to generate a moving scanning
beam traversing the image space of the concave mirror and
forming said light curtain, beam dividing means arranged
to intercepts said scanning beam and to divide off and direct
a part of said scanning beam to the cyclical scale generator
and wherein the cyclical scale generator includes a light
conducting rod with photoelectric detector means arranged
to receive light incident on the surface of the light conducting rod and passing through at least one of the ends
of the light conducting rod and a cycle scale which extends
substantially parallel to the light conducting rod and which
modulates the light fraction passed from the divided off part
of said scanning beam to the photoelectric detector means
to modulate the output signal herefrom.

Thus, in accordance with the invention a light conducting
rod is used for the first time for forming a cyclical
signal. The practical embodiment can advantageously feature
an arrangement in which said cycle scale is constructed
in the manner of a bar pattern arranged directly in front
of the light conducting rod parallel to its axis and which
alternately allows and blocks the passage of the divided off
part of said scanning beam to the light conducting rod as
this beam sweeps over the bar pattern.

Thus light only reaches the light conducting rod in the
rythm of the pitch division of the bar pattern so that
a corresponding well marked cycle or pulse signal appears
from the photoelectric detector means.

- 4 -

If the light conducting rod only has a photoelectric detector
at one of its endfaces the other opposite endface is usefully
made reflecting.

A particularly compact arrangement is achieved if the concave
mirror/and, depending on the precise application, the shape
is of strip like form
of the concave mirror can be usefully chosen from one of the
class of shapes comprising  spherically concave, parabolically
concave, circularly concave and hyperbolically concave. The
light deflecting arrangement is conveniently a mirror wheel.
A strip-like light outlet window for said scanning beam is
conveniently incorporated in the image space of the concave
mirror and is usefully disposed after said beam dividing means
and parallel to the light conducting rod.

A further embodiment is characterized in that the light
conducting rod carries inclined mirrors at regular intervals
on its surface directly opposite to the light entry surface
with the inclined mirrors being adapted to reflect light
incident thereon and received through radial planes of the
light conducting rod at angles of total reflection into the
interior of the light conducting rod. In this arrangement
the provision of the small mirrors at the internal surface
of the light conducting rod ensures that of the light rays
which enter in radial planes only that part which falls on
the small mirrors undergoes total reflection to reach the
photoelectric detector means.

According to a second aspect of the invention there is provided
a light curtain generating apparatus incorporating a cyclical
scale generator and    comprising light source means for
directing a beam of light to a light deflecting arrangement
located substantially at the focus of a concave mirror and
adapted to deflect said beam through a variety of angles
onto said concave mirror for reflection thereat whereby to generate a moving scanning beam traversing the image space of the concave mirror and forming said light curtain, beam dividing means arranged to intercept said scanning beam and to divide off and direct a part of said scanning beam to the cyclical scale generator and wherein said cyclical scale generator comprises a series of individual photoelectric detectors arranged spaced apart in a line along which said divided off part of said scanning beam sweeps whereby the signals generated from the individual photoelectric detectors define a cyclical scale representative of the instantaneous position of said scanning beam.

Further objects and advantages of the invention will be apparent from the subsequent specific description and the claims.

The invention will now be described by way of example only and with reference to the accompanying drawings in which are shown:

Fig. 1   a schematic side view of light curtain generating apparatus in accordance with the present teaching showing a first embodiment in which the cyclical scale generator incorporates a light conducting rod,

Fig. 2   is a view similar to that of Fig. 1 but showing merely the detail of an alternative cyclical scale generator,

Fig. 3   a view on the line III-III of Fig. 1,

Fig. 4   a view on the line VI-VI of Fig. 1 and

Fig. 5   a view on the line V-V of Fig. 2.

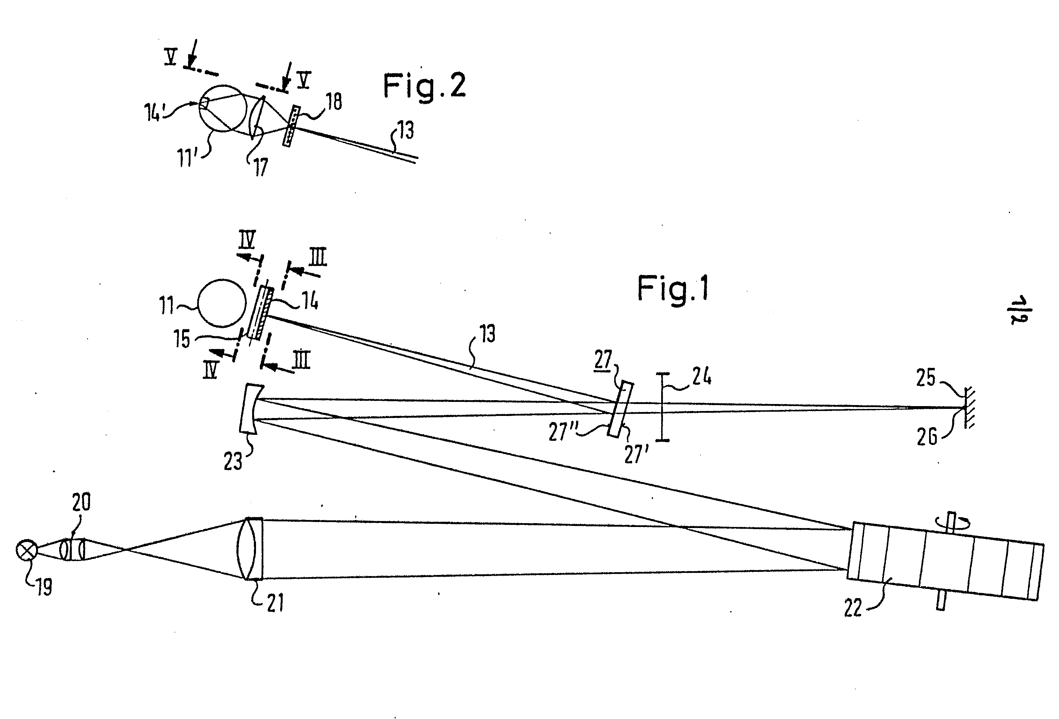

Turning firstly to Fig. 1 there can be seen light curtain
generating apparatus incorporating a cyclical scale. A
light source 19 produces a lightly convergent light beam
via a condensor system 20 and a front objective 21. The
lightly convergent light beam impinges on a light deflecting
arrangement in the form of a mirror wheel 22. The mirror
wheel 22 is tilted relative to the incident light beam in
the manner which can be seen from Fig. 1 so that the
incident light beam is reflected onto a strip-like spherically
concave mirror 23 arranged alongside the objective 21. The
strip-like concave mirror which extends out of the plane
of the drawing of Fig. 1 has a length corresponding to the
width of the scanning region in the image plane of the concave
mirror and the mirror wheel is operative to deflect the
incident beam through a variety of angles onto the concave
mirror so that the scanning beam is continuously and
periodically displaced parallel to itself in the image
space of the concave mirror. The scanning beam passes through
a light exit window 24 and forms a sharp light bead 26 on
a scanning plane 25 so that during rotation of the mirror
wheel the light bead executes a continuous and periodic
scanning movement along a line at right angles to the plane
of the drawing. The light outlet window 24 is likewise of
strip-like construction in the direction at right angles
to the plane of the drawing.

In front of the window 24 but after the concave mirror 23
there is located a somewhat tilted strip-like beam divider
27 arranged to intercept the scanning beam and to divide off
and direct a part 13 of the scanning beam to a cyclical scale
generator. The beam divider is so treated that only a small
fraction, for example 4%, of the incident light is deflected
into the beam 13. The beam divider can conveniently be a normal beam divider with the reflective coating on the rear side 27' removed and the front side of which 27'' has been treated in known manner to divide off the required fraction of the incident light.

As can be seen from Figs. 1, 3 and 4 the cyclical scale generator comprises an elongate pattern 14 which can be realized for example as a sheet metal part with webs which are impermeable to light and light permeable spaces arranged therebetween. The bar pattern thus forms a grid with vertically directed bars.

Behind the bar pattern or grid 14 there is located a screen of cylindrical lenses 15 with the axes of the cylindrical lenses extending at right angles to the longitudinal direction of the bar pattern 14. The screen of cylindrical lenses is followed by a light conducting rod 11 the axis of which likewise extends parallel to the longitudinal direction of the bar pattern 14.

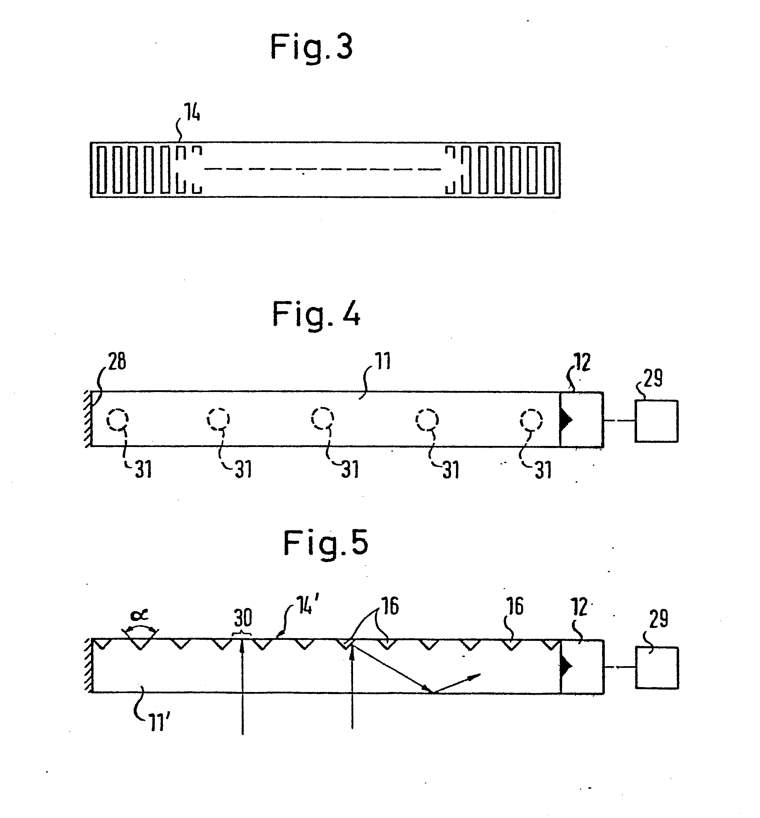

Photoelectric detector means in the form of a photoelectric detector 12 is provided at one endface of the light conducting rod and is connected to an electronic processing circuit 29 which is only schematically illustrated (Fig. 4). The opposite endface of the light conducting rod is provided with a reflecting mirror coating 28 so that light reaching this end face is reflected back to the photoelectric detector at the other endface of the light conducting rod. The electronic processing circuit 29 evaluates the received pulsed signal from the photoelectric detector and thus makes it possible to determine the location of a fault determined by the scanning apparatus within a scanning cycle of the light curtain generating apparatus.

As a result of the described arrangement the light passing through the spaces of the bar pattern 14 will be strongly scattered in the sideways direction so that to a large degree it enters the light conducting rod 11 at angles which will result in total internal reflection inside the light conducting rod 11 and will result in a significant light fraction of the divided off part of the scanning beam or reaching the photoelectric detector. If, in contrast, the light bead projected from the beam divider onto the bar pattern 14 falls on a web of the bar pattern 14 then no light reaches the photoelectric detector 12. It is thus essential that the light bead developed from the divided off part of said scanning beam has a width which is not greater than the width of the webs of the bar pattern. The bar pattern thus forms a cycle scale which modulates the light fraction passed from the divided off part said scanning beam to the photoelectric detector to modulate the output signal therefrom.

In the embodiment of Figs. 2 and 5 pairs of individual mirrors 16 are arranged inclined to one another in triangular fashion and spaced apart at regular intervals along the inner surface of the light conducting rod 11 which lies opposite to the light entry surface 11'.The aperture angle of each pair of mirrors is approximately 120$^o$ and ensures that the light which impinges radially or through radial planes of the light conducting rod onto the mirrors 16 is reflected at angles of total reflection into the interior of the light conducting rod as is indicated in Fig. 5. If, in contrast, the light falls on the dead zones or regions 30 between the individual mirrors 16 then it is only partially reflected in the radial direction and cannot propagate to the photoelectric detector 12.

In order to improve the sharpness of the output pulses from
the photoelectric detector 12 it can be advantageous to make
the regions 30 between the individual mirrors light absorbing
or at least light transmitting.

In order to ensure troublefree conduction of the light despite
the arrangement of the individual mirrors 16 the incident
light should, in the manner shown in Fig. 2 as far as possible
impinge convergently onto the arrangement of the mirrors 16.
In order to achieve this even when a sharp light bead is
generated by the bead 13 a light scattering element 18 can
be arranged in front of the light conducting rod, The
light scattering      should however be restricted to directions
at right angles to the axis of the light conducting rod.
A cylindrical lens screen with the axes of the cylindrical
lenses extending parallel to the axis of the light conducting
rod 11' is suitable for this purpose. The so fanned out light
can, in accordance with Fig. 2, first of all enter a cylindrical
lens 17 arranged parallel to the light conducting rod 11'.
This cylindrical lens 17 allows the light to impinge on a
relatively large part of the diameter of the light conducting
rod. Because of the preferably round construction of the
light conducting rod 11' the light is then once more refracted
on entering the light conducting rod and impinges convergently
on the individual mirrors 16.

In a considerably simplified embodiment the cyclical scale
generator can simply take form of diodes 31 arranged at
defined intervals as shown schematically in Fig. 4 in place
of the light conducting rod. However for cost reasons this
embodiment is only considered when a relative coarse cyclical
scale is required and thus      only relative few diodes are
needed. For finer divisions of the cyclical scale the embodiment utilizing light conducting rods is preferred on cost grounds.

The cyclical scale generator can also be used to monitor the power of the light source which is preferably a laser.

It will be apparent to those skilled in the art that various modifications can be made to the described embodiments without departing from the scope of the present teaching.

0014465

We claim:

1. Light curtain generating apparatus incorporating a cyclical scale generator 14, 15, 11 and comprising light source means 19, 20, 21 for directing a beam of light to a light deflecting arrangement 22 located substantially at the focus of a concave mirror 23 and adapted to deflect said beam through a variety of angles onto said concave mirror 23 for reflection thereat whereby to generate a moving scanning beam 26 traversing the image space of the concave mirror and forming said light curtain, beam dividing means 27 arranged to intercept said scanning beam and to divide off and direct a part 13 of said scanning beam to the cyclical scale generator 14, 15, 11 and wherein the cyclical scale generator 14, 15, 11 includes a light conducting rod 11 with photoelectric detector means 12 arranged to receive light incident on the surface of the light conducting rod and passing through at least one of the ends of the light conducting rod and a cycle scale 14 which extends substantially parallel to the light conducting rod and which modulates the light fraction passed from the divided off part 13 of said scanning beam to the photoelectric detector means 12 to modulate the output signal therefrom.

2. Light curtain generating apparatus in accordance with claim 1 and in which said light deflecting arrangement comprises a mirror wheel 22.

3. Light curtain generating apparatus in accordance with either of the preceding claims and in which said concave mirror 23 is of strip-like form.

4. Light curtain generating apparatus according to claim 3 and in which said light conducting rod 11 is disposed parallel to said concave mirror strip 23.

5. Light curtain generating apparatus according to any one of the preceding claims and in which said concave mirror 23 has a shape chosen from one of the class of shapes comprising spherically concave, parabolically concave, circularly concave and hyperbolically concave.

6. Light curtain generating apparatus according to any one of the preceding claims and incorporating a photoelectric light receiving arrangement for detecting said scanning beam 26.

7. Light curtain generating apparatus in accordance with claim 6 and incorporating a retro-reflector for reflecting said scanning beam to said photoelectric light receiving arrangement.

8. Light curtain generating apparatus according to any one of the preceding claims and incorporating a strip-like light outlet window 24 for said scanning beam in the image space of said concave mirror.

9. Light curtain generating apparatus according to claim 8 and in which said strip-like light outlet window 24 is substantially parallel to said light conducting rod 11 and disposed after said beam dividing means 27.

10. Light curtain generating apparatus in accordance with any one of the preceding claims and in which said cycle scale 14 is constructed in the manner of a bar pattern arranged directly in front of the light conducting rod 11 parallel to its axis and which alternately allows and blocks the passage of the divided off part 13 of said scanning beam to the light conducting rod 11 as this beam sweeps over the bar pattern.

11. Light curtain generating apparatus in accordance with claim 10 and in which a cylindrical lens screen 15 is arranged between the bar pattern 14 and the light conducting rod 11 with the axis of the cylindrical lenses of said cylindrical lens screen extending at right angles to the axis of the light conducting rod.

12. Light curtain generating apparatus in accordance with claim 1 and in which the light conducting rod carries inclined mirrors 16 at regular intervals on its surface diametrically opposite to the light entry surface, the inclined mirrors 16 being adapted to reflect light incident thereon in radial planes of the light conducting rod at angles of total reflection into the interior of the light conducting rod.

13. Light curtain generating apparatus according to claim 12 and in which the regions between the individual inclined mirrors 16 are constructed to absorb light,

14. Light curtain generating apparatus in accordance with either of claims 12 and 13 and in which the light conducting rod is arranged in a region of said divided off part of the scanning beam at which it has a diameter such that it embraces as large a part as possible of the diameter of the light conducting rod.

15. Light curtain generating apparatus in accordance with claim 14 and in which a cylindrical lens 17 is positioned in front of said light conducting rod.

16. Light curtain generating apparatus in accordance with claim 12 and in which, on arranging the light conducting rod 11' in the region of a fine scanning beam, a light scattering element 18 is arranged in front of the light conducting rod 11'.

17. Light curtain generating apparatus in accordance with claim 16 and in which a cylindrical lens 17 is interposed between said light scattering element and said light conducting rod 11'.

18. Light curtain generating apparatus in accordance with claim 16 and in which said light scattering element 18 is a cylindrical lens screen disposed with the axes of the cylindrical lenses extending parallel to the light conducting rod.

19. Light curtain generating apparatus incorporating a cyclical scale generator 31, 11 and comprising light source means 19, 20, 21 for directing a beam of light to a light deflecting arrangement 22 located substantially at the focus of a concave mirror 23 and adapted to deflect said beam through a variety of angles onto said concave mirror for reflection thereat whereby to generate a moving scanning beam 26 traversing the image space of the concave mirror and forming said light curtain, beam dividing means 27 arranged to intercept said scanning beam and to divide off and direct a part 13 of said scanning beam to the cyclical scale generator 31, 11 and wherein said cyclical scale generator 31, 11 comprises a series of individual photoelectric detectors 31 arranged spaced apart in a line along which said divided off part 13 of said scanning beam sweeps whereby the signals generated from the individual photoelectric detectors 31 define a cyclical scale representative of the instantaneous position of said scanning beam.

20. Light curtain generating apparatus incorporating a cyclical scale generator 14, 15, 11 and comprising a transmitter part 19, 20, 21, 22 incorporating light source means 19, 20, 21 for directing a beam of light to a light deflecting arrangement 22 located substantially at the focus of a concave mirror 23 and adapted to deflect said beam through a variety of angles onto said concave mirror for reflection thereat whereby to generate a moving scanning beam 26 traversing the image space of the concave mirror and forming said light curtain, beam dividing means 27 arranged to intercept said scanning beam and to divide off and direct a part 13 of said scanning beam to the cyclical scale generator 14, 15, 11 said cyclical scale generator 14, 15, 11 being optically decoupled from said light transmitter there being further provided a light receiving arrangement for detecting said scanning beam.

21. A cyclical scale generator for use in light curtain generating apparatus in accordance with any one of the previous claims.

Fig.2

Fig.1

## Fig. 3

## Fig. 4

## Fig. 5

**PARTIAL EUROPEAN SEARCH REPORT**
which under Rule 45 of the European Patent Convention
shall be considered, for the purposes of subsequent
proceedings, as the European search report

European Patent Office

Application number

EP 80 10 0583

## DOCUMENTS CONSIDERED TO BE RELEVANT

| Category | Citation of document with indication, where appropriate, of relevant passages | Relevant to claim |
|---|---|---|
| | US - A - 4 116 527 (E. SICK) <br> * Whole document * | 1-6,12 |
| | FR - A - 2 333 260 (ERWIN SICK OPTIK ELEKTRONIK) <br> * Pages 11,12,18-19; figures 11-13 * | 1,12, 15-18 |
| | US - A - 4 037 971 (J. BELLESON et al. ) <br> * Columns 5,6; figures 1-3 * | 1,2, 10,20 |
| | US - A - 3 060 319 (O. GREUNKE) <br> * Whole document * | 1 |
| | US - A - 3 835 249 (A. DATTILO et al. ) <br> * Columns 4,5; figures 1-3 * | 1,10 |

**CLASSIFICATION OF THE APPLICATION (Int. Cl.³)**

G 02 B 27/17

**TECHNICAL FIELDS SEARCHED (Int.Cl.³)**

G 01 N 21/89
21/86
G 01 D 21/04
G 02 B 27/17

## INCOMPLETE SEARCH

The Search Division considers that the present European patent application does not comply with the provisions of the European Patent Convention to such an extent that it is not possible to carry out a meaningful search into the state of the art on the basis of some of the claims.

Claims searched completely: 1-18, 20-21
Claims searched incompletely:
Claims not searched: 19
Reason for the limitation of the search: Contradictions.
Claim 19 is not clear and corresponding description on page 9, last paragraph to page 10, line 1 is not clear as well. This description says: "diodes (31) at intervals... in place of rod (11)" but: claim 19 says: "scale generator (31,11)".

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family,
corresponding document

| Place of search | Date of completion of the search | Examiner |
|---|---|---|
| The Hague | 16-05-1980 | BOEHM |

EPO Form 1505.1  06.78